(19) Europäisches Patentamt
European Patent Office
Office européen des brevets

(11) Veröffentlichungsnummer : **0 464 043 B1**

(12) # EUROPÄISCHE PATENTSCHRIFT

(45) Veröffentlichungstag der Patentschrift :
**10.02.93 Patentblatt 93/06**

(51) Int. Cl.$^5$ : **C02F 1/56,** B01D 21/01

(21) Anmeldenummer : **90904278.0**

(22) Anmeldetag : **14.03.90**

(86) Internationale Anmeldenummer :
**PCT/EP90/00410**

(87) Internationale Veröffentlichungsnummer :
**WO 90/11253 04.10.90 Gazette 90/23**

(54) **VERWENDUNG VON NICHT HYDROLYSIERTEN N-VINYLFORMAMID-EINHEITEN ENTHALTENDEN COPOLYMERISATEN ALS FLOCKUNGS- UND ENTWÄSSERUNGSMITTEL.**

(30) Priorität : **18.03.89 DE 3909005**

(43) Veröffentlichungstag der Anmeldung :
**08.01.92 Patentblatt 92/02**

(45) Bekanntmachung des Hinweises auf die Patenterteilung :
**10.02.93 Patentblatt 93/06**

(84) Benannte Vertragsstaaten :
**BE DE FR GB IT NL**

(56) Entgegenhaltungen :
**EP-A- 0 220 603**
**EP-A- 0 251 182**
**JP-A-61 118 406**

(56) Entgegenhaltungen :
**US-A- 4 421 602**
**US-A- 4 444 667**
**US-A- 4 772 359**
**US-A- 4 824 913**

(73) Patentinhaber : **BASF Aktiengesellschaft**
**Carl-Bosch-Strasse 38**
**W-6700 Ludwigshafen (DE)**

(72) Erfinder : **MOENCH, Dietmar**
**Akazienweg 7**
**W-6940 Weinheim (DE)**
Erfinder : **HARTMANN, Heinrich**
**Weinheimer Strasse 46**
**W-6703 Limburgerhof (DE)**
Erfinder : **BUECHNER, Karl-Heinz**
**Kirchfeldring 14a**
**W-6822 Altlussheim (DE)**

EP 0 464 043 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft die Verwendung von N-Vinylformamid-Einheiten einpolymerisiert enthaltenden Copolymerisaten als Flockungs- und Entwässerungsmittel für die Behandlung von Abwässern und Schlämmen.

Aus der JP-A-118 406/86 sind wasserlösliche Polyvinylamine bekannt, die durch Polymerisieren von N-Vinylformamid oder Mischungen aus N-Vinylformamid mit anderen wasserlöslichen Monomeren, wie Acrylamid, N,N-Dialkylacrylamiden oder Diallyldialkylammoniumsalzen und anschließende Hydrolyse der Polymerisate mit Basen, z.B. Ethylamin, Diethylamin, Ethylendiamin oder Morpholin, hergestellt werden. Die Polyvinylamine werden als Entwässerungsmittel und Retentionsmittel bei der Papierherstellung und als Flockungsmittel für Abwässer verwendet.

Aus der US-PS 4 421 602 sind Polymerisate bekannt, die durch partielle Hydrolyse von Poly-N-Vinylformamid mit Säuren oder Basen erhältlich sind. Diese Polymerisate enthalten aufgrund der Hydrolyse Vinylamin- und N-Vinylformamid-Einheiten. Sie werden beispielsweise bei der Herstellung von Papier als Entwässerungshilfsmittel, Flockungsmittel und Retentionsmittel verwendet. Gemäß der Lehre der US-PS 4 444 667 werden partiell hydrolysierte Poly-N-Vinylformamide als Flockungsmittel für Schlämme verwendet.

Aus der EP-A-0 220 603 ist u.a. bekannt, N-Vinylformamid zusammen mit basischen Acrylsäureestern, wie Dimethylaminoethylacrylat oder N-Vinylimidazolinen, in überkritischem Kohlendioxid der Copolymerisation zu unterwerfen. Die dabei anfallenden feinteiligen Copolymerisate werden in partiell hydrolysierter Form, in der sie Vinylamin-Einheiten enthalten, beispielsweise als Retentionsmittel und Flockungsmittel bei der Herstellung von Papier sowie als Flockungsmittel für Schlämme verwendet.

Der Erfindung liegt die Aufgabe zugrunde, Flockungs- und Entwässerungsmittel zur Verfügung zu stellen, die möglichst wirksamer sind als die bisher bekannten und die technisch leichter zugänglich sind.

Die Aufgabe wird erfindungsgemäß gelöst mit der Verwendung von nicht hydrolysierten Copolymerisaten, die

(a) 99 bis 1 Mol% N-Vinylformamid und

(b) 1 bis 99 Mol% mindestens eines wasserlöslichen basischen Monomers der Formeln

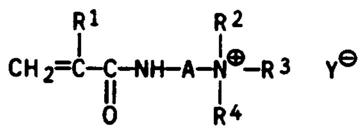 (I)

oder

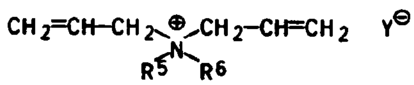 (II),

in denen

$R^1$ = H, $CH_3$, $C_2H_5$,
$R^2$, $R^3$ und $R^4$= H, $CH_3$, $C_2H_5$, $(-CH_2-CH_2-O-)_nH$,
$R^5$, $R^6$ = $C_1$- bis $C_{10}$-Alkyl
A = $C_1$- bis $C_6$-Alkylen
n = 1 bis 6 und
$Y^{\ominus}$ = ein Anion
bedeuten,

einpolymerisiert enthalten, als Flockungsmittel für Abwässer und Entwässerungshilfsmittel für Schlämme.

Der Vorteil der nicht hydrolysierten N-Vinylformamid-Einheiten enthaltenden Copolymerisate gegenüber den bisher verwendeten hydrolysierten Copolymerisate, die nach der Hydrolyse Vinylamin-Einheiten enthalten, ist darin zu sehen, daß die in vielen Fällen schwierig durchzuführende Hydrolyse fortfällt und durch direkte Copolymerisation wirksame Hilfsmittel für die oben angegebenen Anwendungen erhältlich sind.

Als Monomer (a) der Copolymerisate kommt N-Vinylformamid in Betracht. Dieses Monomer ist zu 1 bis 99, vorzugsweise 60 bis 95 Mol%, am Aufbau der Copolymerisate beteiligt.

Als Monomere der Gruppe (b) eignen sich die Verbindungen der Formel I, von denen folgende Verbindungen beispielhaft genannt seien:

N-Trimethylammoniumethylacrylamidchlorid,

N-Trimethylammoniumethylmethacrylamidchlorid,
N-Trimethylammoniumethylacrylamidmethosulfat,
N-Trimethylammoniumethylmethacrylamidmethosulfat,
N-Ethyldimethylammoniummethylmethacrylamidethosulfat,
N-Ethyldimethylammoniummethylacrylamidethosulfat,
N-Trimethylammoniumpropylacrylamidchlorid,
N-Trimethylammoniumpropylmethacrylamidchlorid,
N-Trimethylammoniumpropylacrylamidmethosulfat,
N-Trimethylammoniumpropylmethacrylamidmethosulfat,
N-Ethyldimethylammoniumpropylmethacrylamidethosulfat,
N-Ethyldimethylammoniumpropylacrylamidethosulfat.

Bevorzugt ist N-Trimethylammoniumpropylmethacrylamidchlorid.

Als Monomere der Gruppe (b) kommen außerdem die Verbindungen der Formel II in Betracht. Verbindungen dieser Art sind beispielsweise Diallyldimethylammoniumchlorid, Diallyldimethylammoniumbromid, Diallyldiethylammoniumchlorid und Diallyldiethylammoniumbromid. Vorzugsweise verwendet man Diallyldimethylammoniumchlorid. Das Anion $Y^{\ominus}$ ist ein Säurerest und steht vorzugsweise für Chlorid, Bromid, Jodid, Sulfat, Methosulfat und Ethosulfat.

Am Aufbau der Copolymerisate können von den Monomeren der Gruppe (b) die Verbindungen der Formel I oder II entweder allein oder in Mischung untereinander beteiligt sein. Ebenso ist es auch möglich, mehrere Verbindungen der Formel I oder II bei der Copolymerisation mit dem Monomer (a) einzusetzen. Die Monomeren der Gruppe (b) sind zu 99 bis 1, vorzugsweise 40 bis 5 Mol%, am Aufbau der Copolymerisate beteiligt.

Die Copolymerisation der Monomeren (a) und (b) erfolgt in wäßriger Lösung in Gegenwart von Polymerisationsinitiatoren, die unter den Polymerisationsbedingungen in Radikale zerfallen. Geeignete Polymerisationsinitiatoren sind beispielsweise Wasserstoffperoxid, Alkali- und Ammoniumsalze der Peroxidischwefelsäure, Peroxide, Hydroperoxide, Redoxkatalysatoren und besonders nicht-oxidierende Initiatoren, wie in Radikale zerfallende Azoverbindungen. Vorzugsweise verwendet man wasserlösliche Azoverbindungen, wie 2,2′-Azobis(2-amidinopropan)dihydrochlorid, 2,2′-Azo-bis(N,N′-dimethylenisobutyramidin)dihydrochlorid oder 2,2′-Azo-bis[2-methyl-N-(2-hydroxyethyl)propionamid]. Die Polymerisationsinitiatoren werden in üblichen Mengen eingesetzt, z.B. in Mengen von 0,01 bis 5,0 Gew.%, bezogen auf die zu polymerisierenden Monomeren. Die Polymerisation kann in einem weiten Temperaturbereich, gegebenenfalls unter vermindertem oder auch unter erhöhtem Druck in entsprechend ausgelegten Apparaturen, vorgenommen werden. Vorzugsweise erfolgt die Polymerisation bei Normaldruck und Temperaturen bis zu 100°C, insbesondere in dem Bereich von 30 bis 80°C. Die Konzentration der Monomeren in der wäßrigen Lösung wird vorzugsweise so gewählt, daß Polymerisatlösungen anfallen, deren Feststoffgehalt 10 bis 90, vorzugsweise 20 bis 70 Gew.%, beträgt. Der pH-wert des Reaktionsgemisches wird in dem Bereich von 4 bis 10, vorzugsweise 5 bis 8, eingestellt.

In Abhängigkeit von den Polymerisationsbedingungen erhält man Copolymerisate eines unterschiedlichen Molekulargewichts. Zur Charakterisierung der Copolymerisate wird anstelle des Molekulargewichts der K-wert noch H. Fikentscher angegeben. Die K-werte (gemessen in 5%iger wäßriger Kochsalzlösung bei 25°C und einer Polymerkonzentration von 0,1 Gew.%) betragen 80 bis 350. Copolymerisate mit niedrigen Molekulargewichten und entsprechend niedrigen K-werten erhält man mit Hilfe der üblichen Methoden, d.h. Einsatz größerer Peroxidmengen bei der Copolymerisation oder Verwendung von Polymerisationsreglern oder Kombinationen der beiden genannten Maßnahmen. Polymerisate mit einem hohen K-wert und mit hohen Molekulargewichten erhält man beispielsweise durch Polymerisieren der Monomeren in Form der umgekehrten Suspensionspolymerisation oder durch Polymerisieren der Monomeren (a) und (b) nach dem Verfahren der Wasser-in-Öl-Polymerisation. Bei dem Verfahren der umgekehrten Suspensionspolymerisation sowie der Wasser-in-Öl-Polymerisation verwendet man als Ölphase gesättigte Kohlenwasserstoffe, beispielsweise Hexan, Heptan, Cyclohexan, Dekalin oder aromatische Kohlenwasserstoffe, wie Benzol, Toluol, Xylol und Cumol. Das Verhältnis von Ölphase zu wäßriger Phase beträgt bei der umgekehrten Suspensionspolymerisation beispielsweise 10 : 1 bis 1 : 10, vorzugsweise 7 : 1 bis 1 : 1.

Um die wäßrige Monomerlösung in einer inerten hydrophoben Flüssigkeit zu dispergieren, benötigt man ein Schutzkolloid, das die Aufgabe hat, die Suspension der wäßrigen Monomerlösung in der inerten hydrophoben Flüssigkeit zu stabilisieren. Die Schutzkolloide haben außerdem einen Einfluß auf die Teilchengröße der durch Polymerisation entstehenden Polymerperlen.

Als Schutzkolloide können beispielsweise diejenigen Substanzen verwendet werden, die in der US-PS 2 982 749 beschrieben sind. Außerdem eignen sich die aus der DE-PS 2 634 486 bekannten Schutzkolloide, die beispielsweise durch Umsetzung von Ölen und/oder Harzen, die jeweils allylständige Wasserstoffatome aufweisen, mit Maleinsäureanhydrid erhältlich sind.

Weitere geeignete Schutzkolloide sind beispielsweise aus der DE-PS 27 10 372 bekannt, die erhältlich

sind durch thermische oder radikalische Lösungs- oder Substanzpolymerisation aus 60 bis 99,9 Gew.% Dicyclopentadien, 0 bis 30 Gew.% Styrol und 0,1 bis 10 Gew.% Maleinsäureanhydrid.

Außerdem eignen sich als Schutzkolloide Pfropfpolymerisate, die erhältlich sind durch Pfropfen von Polymeriaten (A) aus

a) 40 bis 100 Gew.% monovinylaromatischen Monomeren,

b) 0 bis 60 Gew.% monoethylenisch ungesättigten Carbonsäuren mit 3 bis 6 C-Atomen, Maleinsäureanhydrid und/oder Itaconsäureanhydrid und

c) 0 bis 20 Gew.% anderen monoethylenisch ungesättigten Monomeren,

mit der Maßgabe, daß die Summe der Gewichtsprozente (a) bis (c) immer 100 beträgt, die Polymerisate A) ein Molekulargewicht (Zahlenmittel) von 500 bis 20 000 und Hydrierjodzahlen (nach DIN 53 241) von 1,3 bis 51 aufweisen, mit Monomermischungen aus

1) 70 bis 100 Gew.% Acrylsäureester und/oder Methacrylsäureester von 1 bis 20 C-Atome enthaltenden einwertigen Alkoholen,

2) 0 bis 15 Gew.% monoethylenisch ungesättigten Carbonsäuren mit 3 bis 6 C-Atomen, Maleinsäureanhydrid und/oder Itaconsäureanhydrid,

3) 0 bis 10 Gew.% Acrylsäuremonoester und/oder Methacrylsäuremonoester von mindestens zweiwertigen Alkohlen,

4) 0 bis 15 Gew.% monovinylaromatischen Monomeren und

5) 0 bis 7,5 Gew.% Acrylamid und/oder Methacrylamid, mit der Maßgabe, daß die Summe der Gewichtsprozente a) bis e) immer 100 beträgt,

bei Temperaturen bis zu 150°C in einem inerten hydrophoben Verdünnungsmittel in Gegenwart von Polymerisationsinitiatoren, wobei die Monomeren in einer Menge von 97,5 bis 50 Gew.%, bezogen auf die Mischung aus Polymerisat (A) und Monomeren, eingesetzt werden. Schutzkolloide dieser Art werden in der EP-A-0 290 753 beschrieben.

Wenn bei der umgekehrten Suspensionspolymerisation ein aliphatischer Kohlenwasserstoff als inerte hydrophobe Flüssigkeit eingesetzt wird, hat sich als Schutzkolloid einr Mischung aus einem anorganischen Suspensionsmittel auf Basis modifizierter feinteiliger Mineralien und einem nichtionischen Tensid als sehr vorteilhaft erwiesen.

Die anorganischen Suspensionsmittel, die eine niedrige hydrophile-lyophile Balance haben, sind die bei den umgekehrten Suspensionspolymerisationsverfahren üblicherweise eingesetzten Mittel. Die mineralische Komponente dieser Stoffe wird beispielsweise von Bentonit, Montmorillonit oder Kaolin gebildet. Die feinteiligen Mineralien werden zur Modifizierung mit Salzen langkettiger Amine, z.B. $C_8$- bis $C_{24}$-Aminen oder quaternären Ammoniumsalzen behandelt, wobei eine Einlagerung der Aminsalze bzw. der quaternären Ammoniumsalze zwischen die einzelnen Schichten der feinteiligen Mineralien erfolgt. Die zur Modifizierung verwendeten gegebenenfalls quaternisierten Ammoniumsalze enthalten vorzugsweise 1 bis 2 $C_{10}$- bis $C_{22}$-Alkylreste. Die anderen Substituenten der Ammoniumsalze sind $C_1$- bis $C_4$-Alkyl oder Wasserstoff. Der Gehalt an freien Ammoniumsalzen der aminmodifizierten Mineralien beträgt höchstens 2 Gew.%. Mit Amoniumsalzen modifizierte feinteilige Mineralien sind im Handel erhältlich.

Zu den anorganischen Suspensionsmitteln für die umgekehrte Suspensionspolymerisation gehört auch Siliciumdioxid, das mit siliciumorganischen Verbindungen umgesetzt worden ist. Eine geeignete siliciumororganische Verbindung ist beispielsweise Trimethylsilylchlorid.

Ziel der Modifizierung der anorganischen feinteiligen Mineralien ist es, die Benetzbarkeit der Mineralien mit dem als äußere Phase der umgekehrten Suspensionspolymerisation verwendeten aliphatischen Kohlenwasserstoff zu verbessern. Bei den schichtförmig aufgebauten natürlichen Mineralien, z.B. Bentonit und Montmorillonit, wird durch die Modifizierung mit Aminen erreicht, daß die modifizierten Mineralien in dem aliphatischen Kohlenwasserstoff quellen und dabei zu sehr feinen Teilchen zerfallen. Die Teilchengröße beträgt etwa 1 µm und liegt im allgemeinen in dem Bereich von 0,5 bis 5 µm. Die nit siliciumorganischen Verbindungen umgesetzten Siliciumdioxide haben eine Teilchengröße in dem Bereich von etwa 10 bis 40 nm. Die modifizierten feinteiligen Mineralien werden sowohl von der wäßrigen Monomerlösung als auch von dem Lösungsmittel benetzt und lagern sich dadurch in die Phasengrenzfläche zwischen wäßriger und organischer Phase an. Sie verhindern bei einer Kollision zweier wäßriger Monomertröpfchen in der Suspension eine Koagulation.

Nach Beendigung der Copolymerisation wird ein Teil des Wassers azeotrop abdestilliert, so daß man Copolymerisate mit einem Feststoffgehalt von 70 bis 99, vorzugsweise 80 bis 95 Gew.%, erhält. Die Copolymerisate liegen in Form feiner Perlen eines Durchmessers von 0,05 bis 1 mm vor. Copolymerisate mit K-Werten von 80 bis 250 werden vorzugsweise eingesetzt.

Die oben beschriebenen Copolymerisate werden zum Unterschied gegenüber dem Stand der Technik in der nicht hydrolysierten Form zur Behandlung von Abwässern aus kommunalen oder industriellen Kläranlagen sowie zur Behandlung von Schlämmen verwendet.

Bei den Schlämmen, die aus kommunalen Kläranlagen oder aus Industriekläranlagen stammen, handelt es sich um diejenigen Stoffe, die sich bei der Klärung der Abwässer am Boden der Behandlungsvorrichtungen absetzen. Der Feststoffgehalt der Schlämme liegt etwa zwischen 2 und 8 Gew.%. Durch Zugabe der erfindungsgemäß zu verwendenden Copolymerisate zu den Schlämmen, insbesondere zu Schlämmen aus kommunalen Kläranlagen, ist es möglich, einen gut filtrierbaren bzw. zentrifugierbaren Rückstand mit einem hohen Feststoffgehalt, bis zu etwa 30 Gew.%, zu gewinnen. Die Flockungsmittel bzw. Entwässerungsmittel werden bei der Schlammbehandlung in einer Menge von 50 bis 500 $g/m^3$ Schlamm angewendet. Es ist erforderlich, das eingesetzte Entwässerungsmittel im Schlamm gut zu verteilen. Dies geschieht beispielsweise in einer Mischtrommel.

Die Flockungs- bzw. Entwässerungswirkung tritt praktisch sofort nach Zugabe der Copolymerisate ein. Man beobachtet dabei eine Teilchenvergrößerung der zu flockenden Feststoffe. Das Wasser wird mit Hilfe üblicher Vorrichtungen, wie Siebbandpressen oder Zentrifugen vom Rückstand getrennt. Der Rückstand kann dann auf einer Deponie gelagert oder auch verbrannt werden.

Die oben angegebenen nicht hydrolysierten Copolymerisate werden auch als Flockungsmittel für Abwässer aus kommunalen oder industriellen Kläranlagen verwendet. Man benötigt hierfür im allgemeinen 10 bis 500 $g/m^3$ Abwasser. Der Vorteil der nicht hydrolysierten Copolymerisate gegenüber bisher Üblichen Flockungsmitteln liegt darin, daß sie zur Bildung großer, stabiler Flocken führen, die sich besonders gut filtrieren lassen.

Der K-Wert der Copolymerisate wurde nach H. Fikentscher, Cellulosechemie Bd. 13, 58 - 64 und 71 - 74 (1932) bei einer Temperatur von 25°C in 5%iger wäßriger Kochsalzlösung und einer Polymerkonzentration von 0,1 Gew.% bestimmt; dabei bedeutet $K = k \cdot 10^3$.

Folgende Einsatzstoffe wurden verwendet:

Copolymerisat 1

Copolymerisat aus 90 Mol% N-Vinylformamid (VFA) und 10 Mol% 3-Methacrylamidopropyltrimethylammoniumchlorid (MAPTAC)

Copolymerisat 1 wurde hergestellt, indem man in einem 2 l-Kolben, der mit einem Rührer, Thermometer, Gaseinleitungsrohr und Rückflußkühler versehen war, 800 g Cyclohexan und 3 g des Schutzkolloids vorlegte, das in Beispiel 1 der EP-A-0 290 753 beschrieben ist. Die Vorlage wurde unter einer Stickstoffatmosphäre und unter Rühren bei einer Drehzahl des Rührers von 300 Umdrehungen pro Minute auf eine Temperatur von 50°C erwärmt. Sobald diese Temperatur erreicht war, gab man innerhalb von 30 Minuten eine Lösung von 117 g N-Vinylformamid, 80 g einer 50gew.%igen wäßrigen Lösung von 3-Methacrylamidopropyltrimethylammoniumchlorid, 0,15 g Diethylentriaminpentaessigsäure-Natriumsalz, 0,65 g 2,2'-Azo-bis(2-amidinopropan)dihydrochlorid und 100 g Wasser hinzu. Der pH-Wert der wäßrigen Phase betrug 6,5. Anschließend wurde das Reaktionsgemisch 16 Stunden bei 50°C gerührt. Danach wurde die Temperatur auf 78°C erhöht und mit Hilfe eines Wasserabscheiders 134 g Wasser azeotrop abdestilliert. Der anfallende weiße perlförmige Feststoff wurde abfiltriert, mit 200 g Cyclohexan gewaschen und im Vakuum vom restlichen Lösemittel befreit. Man erhielt 163 g eines Copolymerisats mit einem Feststoffgehalt von 96,4 Gew.%. Der K-Wert betrug 180.

Analog zu der oben angegebenen Herstellvorschrift wurden die Copolymerisate 2 bis 5 hergestellt, deren Zusammensetzung in Tabelle I angegeben ist.

Tabelle 1

| Copolymerisat Nr. | Mol% VFA[1] | Mol% MAPTAC[2] | Feststoffgehalt [%] | K-Wert |
|---|---|---|---|---|
| 2 | 80 | 20 | 96,1 | 180 |
| 3 | 70 | 30 | 91,0 | 203 |
| 4 | 60 | 40 | 94,1 | 189 |
| 5 | 50 | 50 | 88,0 | 200 |

1) VFA = N-Vinylformamid

2) MAPTAC = 3-Methacrylamidpropyltrimethylammoniumchlorid

Zum Vergleich wurden folgende Polymerisate verwendet:

| | |
|---|---|
| Copolymerisat 6: | Homopolymerisat des N-Vinylformamids mit einem Feststoffgehalt von 96,6 % und einem K-Wert von 203 hergestellt analog der Vorschrift für Copolymerisat 1 durch Homopolymerisation von N-Vinylformamid. |
| Copolymerisat 7: | Partiell hydrolysiertes Polymerisat 6, das durch Homopolymeraisation von N-Vinylformamid nach der für das Copolymerisat 1 angegebenen Herstellvorschrift erhalten wurde, wobei jedoch vor dem Entfernen des Wassers 105 g einer 38%igen Salzsaüre zugegeben und die Mischung 3 Stunden bei 50°C gerührt wurde und erst danach das Wasser azeotrop abdestilliert wurde. Der Hydrolysegrad betrug 42 %, der K-Wert 185, der Feststoffgehalt 93,5 %. |
| Copolymerisat 8: | handelsübliches Copolymerisat aus 70 % Acrylamid und 30 % Dimethylaminoethylacrylat-Methochlorid, K-Wert 220. |
| Copolymerisat 9: | handelsübliches Copolymerisat aus 50 % Acrylamid und 50 % Dimethylaminoethylacrylat-Methochlorid, K-Wert 213. |
| Copolymerisat 10: | handelsübliches Copolymerisat aus 20 % Acrylamid und 80 % Dimethylaminoethylacrylat-Methochlorid, K-Wert 200. |

Aus den Copolymerisaten 1 bis 10 wurden jeweils 0,1 %ige wäßrige Lösungen hergestellt und als Behandlungsmittel für die Klärschlammentwässerung nach folgenden Methoden geprüft:

a) Bestimmung der Flockungszahl und der Filtrationsgeschwindigkeit

500 ml eines Abwasserschlammes wurden in einem 1 l-Meßzylinder mit bestimmten Mengen einer 0,1 %igen wäßrigen Flockungsmittel-Lösung versetzt. Die Flockung trat während der Durchmischung ein. Der Inhalt des Meßzylinders wird dann in einen Büchner-Trichter entleert und filtriert. Anhand des filters wird die Flockung visuell beurteilt.

Dabei bedeutete:

| | |
|---|---|
| kaum sichtbare Flockung | = Flockungszahl 1 |
| geringe Flockung | = Flockungszahl 2 |
| mittlere Flockung | = Flockungszahl 3 |
| gute Flockung für die Praxis meistens ausreichend | = Flockungszahl 4 |
| sehr gute, optimale Flockung | = Flockungszahl 5 |

Gleichzeitig wurde die Filtratmenge nach 15, 30, 45 und 60 sek. gemessen.

b) Flockungswirksamkeit

Bei diesem Test wurde ebenfalls - in einem 1 l-Meßzylinder die Flockungsmittelmenge ermittelt, die zu einem Schlamm gegeben werden muß, um eine optimale Flockung (Flockungszahl = 5) zu erzielen.

Die Wirksamkeit der Copolymerisate 1 bis 10 bei der Behandlung von Faulschlamm aus einer kommunalen Kläranlage wurde jeweils nach der oben unter a) angegebenen Testmethode bestimmt. Um die Flockungszahl 5 zu erreichen, betrug die Aufwandmenge 250 mg Copolymerisat/l Schlamm.

Tabelle 3

| Beispiel Nr. | Vergleichs-beispiel Nr. | Copolymeri-sat Nr. | Filtratmenge in ml nach ... sec 15 | 30 | 45 | 60 |
|---|---|---|---|---|---|---|
| 1 | - | 1 | 200 | 290 | 335 | 350 |
| 2 | - | 2 | 205 | 295 | 335 | 355 |
| 3 | - | 3 | 240 | 350 | 380 | 390 |
| 4 | - | 4 | 220 | 315 | 350 | 365 |
| 5 | - | 5 | 210 | 300 | 340 | 350 |
| | 1 | 6 | - | - | - | -* |
| | 2 | 7 | - | - | - | -* |
| | 3 | 8 | 230 | 315 | 355 | 375 |
| | 4 | 9 | 160 | 235 | 280 | 300 |
| | 5 | 10 | 145 | 225 | 270 | 295 |

* Die Flockenzahl 5 wurde mit der hier verwendeten Aufwandmenge nicht erreicht

## Patentansprüche

1. Verwendung von nicht hydrolysierten Copolymerisaten, die
   (a) 99 bis 1 Mol% N-Vinylformamid und
   (b) 1 bis 99 Mol% mindestens eines wasserlöslichen basischen Monomers der Formeln

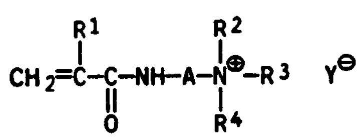

(I)

oder

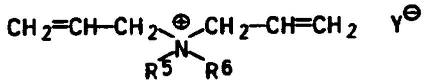

(II),

in denen
$R^1$ = H, $CH_3$, $C_2H_5$,
$R^2$, $R^3$ und $R^4$= H, $CH_3$, $C_2H_5$, $(-CH_2-CH_2-O-)_nH$,
$R^5$, $R^6$ = $C_1$- bis $C_{10}$-Alkyl
A = $C_1$- bis $C_6$-Alkylen
n = 1 bis 6 und
$Y^{\ominus}$ = ein Anion
bedeuten,
einpolymerisiert enthalten, als Flockungsmittel für Abwässer und Entwässerungsmittel für Schlämme.

## Claims

1. Use of a nonhydrolyzed copolymer which contains, as copolymerized units,
   (a) from 99 to 1 mol % of N-vinylformamide and
   (b) from 1 to 99 mol % of one or more water-soluble basic monomers of the formula

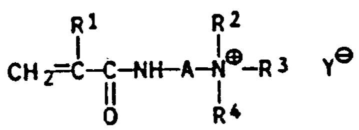 (I)

or

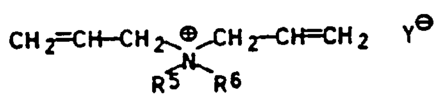 (II)

where $R^1$ is H, $CH_3$, $C_2H_5$, $R^2$, $R^3$ and $R^4$ are each H, $CH_3$, $C_2H_5$ or $(-CH_2-CH_2-O-)_nH$, $R^5$ and $R^6$ are each $C_1$-$C_{10}$-alkyl, A is $C_1$-$C_6$-alkylene, n is from 1 to 6 and $Y^\ominus$ is an anion, as a flocculant for wastewaters and as a dewatering agent for sludges.

## Revendications

1. Utilisation de copolymères non hydrolysés, qui contiennent, incorporés par polymérisation,
   (a) 99 à 1 % molaires de N-vinylformamide et
   (b) 1 à 99 % molaires d'un monomère basique, soluble dans l'eau, des formules

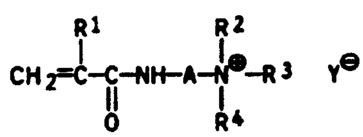 (I)

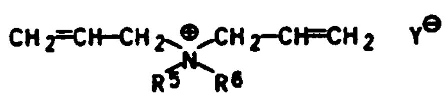 (II),

dans lesquelles
$R^1$ = H, $CH_3$, $C_2H_5$,
$R^2$, $R^3$ et $R^4$= H, $CH_3$, $C_2H_5$, $(-CH_2-CH_2-O-)_nH$,
$R^5$, $R^6$ = alkyle en $C_1$ à $C_{10}$,
A = alkylène en $C_1$ à $C_6$,
n = 1 à 6 et
$Y^\ominus$ = un anion,
à titre d'agents de floculation pour des eaux résiduaires et d'agents d'égouttage ou de déshydratation pour des suspensions ou boues.